# EUROPEAN PATENT SPECIFICATION

(11) **EP 0 728 412 B1**
(45) Date of publication and mention of the grant of the patent: **05.06.2002**
(21) Application number: 96200457.8
(22) Date of filing: 22.02.1996
(51) Int. Cl.: A01J 5/017, A01J 7/04

(54) **An implement for milking animals**
Vorrichtung zum Melken von Tieren
Dispositif de traite d'animaux

(30) Priority: 24.02.1995 NL 9500364
(43) Date of publication of application: 28.08.1996
(73) Proprietor: MAASLAND N.V., 3155 PD Maasland (NL)
(72) Inventor: Van der Lely, Cornelis, 6300 Zug (CH)
(74) Representative: Corten, Maurice Jean F.M.

(56) References cited:
- EP-A- 0 476 771
- EP-A- 0 565 189
- EP-A- 0 617 885
- EP-A- 0 630 558
- US-A- 4 805 559

## Description

The present invention relates to an implement according to the preamble of claim 1 for automatically milking animals, such as cows, in a milking box with a milking robot, the milking robot comprising milking means with teat cups connectable to the teats of the animal and cleaning and/or foremilking means with at least one additional teat cup connectable to the teats of the animal.

Such an implement is known from EP-A-0 630 558. In this document the cleaning and/or foremilking means are provided with only one teat cup which is mounted on a robot arm construction. The teat cups of the milking device are mounted on a further robot arm.

The purpose of the invention is to provide for an improved construction in which the several functions of the milking robot, viz, cleaning and/or foremilking and milking can be performed in a more flexible manner.

Therefore, according to the invention, the implement as described in the opening paragraph is characterized in that the milking robot further comprises gripping means with at least one gripper to engage the teat cups individually and to connect the teat cups to the teats. The teat cups of the cleaning and/or foremilking means may also be designated hereafter as cleaning cups, while the teat cups of the milking means may also be designated as milking cups.

Furthermore, the rearmost udder quarters can supply more milk than the foremost ones. This means that, when the foremost teats are the last to be cleaned, the milking of the rearmost udder quarters can already be started. Therefore, one or more milking cups can be active simultaneously with one or more cleaning cups, so that milking is effected more efficiently. Therefore, one further aspect of the invention is that one or more cups suitable for milking can be active simultaneously with one or more cups appropriate for cleaning and/or for foremilking.

For the purpose of seizing and moving the cups easily by means of the gripping means, it is advantageous when the seat of a cup is provided on the milk box near the floor thereof. Therefore, one further aspect of the invention is that the seat of a teat cup is provided on the milk box near the floor thereof. Preferably, on both longitudinal sides of the milk box, there is arranged an equal number of teat cups in the inoperative position.

In a concrete embodiment, the implement comprises four teat cups suitable for milking and two teat cups appropriate for cleaning and/or foremilking. In this configuration, for example, the two rearmost teats may be cleaned first and the two foremost teats may be cleaned thereafter, while the connection of the milking cups to the rearmost teats can already be started and, as soon as the cleaning of the foremost teats has ended, the connection of the milking cups to the latter teats can take place. In an other embodiment, there are provided four teat cups suitable for milking and four teat cups appropriate for cleaning and/or for foremilking, so that all four teats can be cleaned approximately at the same time, whereafter the milking cups can be connected to the four teats.

According to an other prefered feature of the invention, the milking robot may be provided with gripping means including at least two grippers, each of which being adapted to seize and move at least two teat cups. Preferably, there is arranged a gripper on both longitudinal sides of the milk box for the purpose of seizing and moving at least three cups. In that case each of the grippers will be capable of seizing two milking cups and one or two cleaning cups. When the milking robot is provided with gripping means including at least two grippers, it is advantageous when at least one of these grippers is movable in height so as to be capable of being moved across the other one. In that case it would be favourable as well when the movability in height is such that a gripper can be moved across the cups being in the inoperative position, because the gripper has to be capable of seizing the cups at random; seizing a cup that, relative to the gripper, is situated rearmost may not be hampered by the other cups.

According to again an other prefered feature of the invention, the milking robot may be provided with gripping means including a gripper designed so as to be capable of rotatably seizing a cup. For that purpose, the gripper may include two parts movable relative to each other, towards each other and from each other, by means of which a cup can be seized. In particular, the gripper may include two parts pivotable relative to each other, by means of which a cup can be seized. When a gripper has seized a cup, the two gripper parts may constitute a holder, in which the cup is freely rotatable about its longitudinal axis. This free rotatability facilitates the connection and disconnection of the cups. The gripper, i.e. one or both gripper parts movable relative to each other, may be controlled pneumatically. For that purpose, there may be disposed in the gripper a pneumatic control cylinder for the purpose of seizing a cup.

When the cups are disconnected or are kicked off by the animal, they should not fall to the floor, at least not in a position in which their openings are faced downwards. Therefore, according to a further feature of the invention, by means of a first cable, a cup is suspended movably in height in such a way that the opening of the cup cannot come into contact with the floor of the milk box. The cup is preferably suspended from a longitudinal side wall of the milk box; in particular, by means of the first cable, the cup is suspended over a roller element, while at the end of this cable there is provided a counterweight. This counterweight prevents the cups from falling down upon disconnection and, by moving the cup deliberately downwards, it is realized that the cup is maintained in a vertical position, its opening faced upwards. In its inoperative position, by means of a second cable, the cup can be placed into its seat near the floor of the milk box. This second cable may be connected with a pneumatic control cylinder, preferably made of a light material, such as aluminium. These cylinders are preferably disposed beside the milk box, near the floor thereof. When the cups are disconnected, they are drawn, by means of these control cylinders, towards the holder beside the milk box. As mentioned before, the first cable ensures that the cups are maintained in their upright position.

For the purpose of determining the position of the teats, there is provided a detector, preferably a laser detector, arranged on a separate robot arm. In a concrete embodiment, this robot arm is disposed on one of the longitudinal sides of the milk box, pivotably about an upwardly extending shaft and movably in the longitudinal direction of the milk box as well as in height. The detector itself is preferably disposed rotatably or pivotably on the end of the robot arm. The position of the detector under the animal's udder can be determined by means of a position measuring member which, pushed against the animal, preferably against the rear side thereof, ascertains the animal's position relative to the milk box. By means of this position measuring member, the robot arm including the detector can be controlled in such a way that the detector can follow the animal's movements in the longitudinal direction of the milk box.

According to a further inventive feature, a cup suitable for milking is provided with a milk tube, attached by means of a loop to the frame of the milk box. Such a cup may furthermore be provided with a pulsation tube connected, preferably over a part of its length, with the milk tube. The cups appropriate for cleaning and/or foremilking may be provided with a discharge line for the cleaning fluid and/or the foremilk. Moreover, these cleaning cups may be provided with a line for the supply of the cleaning fluid, which line debouches into a fluid collecting space, situated near the upper side of the cup and constituting part of the teat space. This fluid collecting space is preferably ring-shaped and its diameter is larger than that of the further teat space downwardly adjacent thereto. The cleaning fluid is sucked in by the underpressure prevailing in the lower part of the teat space after the cup has been connected to a teat. The cleaning fluid supply line extending in the longitudinal direction of a cup, may partly be located in the wall of the cup or in a recess therein. Said cleaning fluid supply line may be connected, over a part of its length, possibly together with a pulsation tube, with the discharge line for the cleaning fluid and/or the foremilk.

For a better understanding of the invention and to show how the same may be carried into effect, reference will now be made, by way of example, to the accompanying drawings, in which:
Figure 1 shows, in plan view, the implement according to the invention, in a position in which the cleaning cups are connected to the rearmost teats;

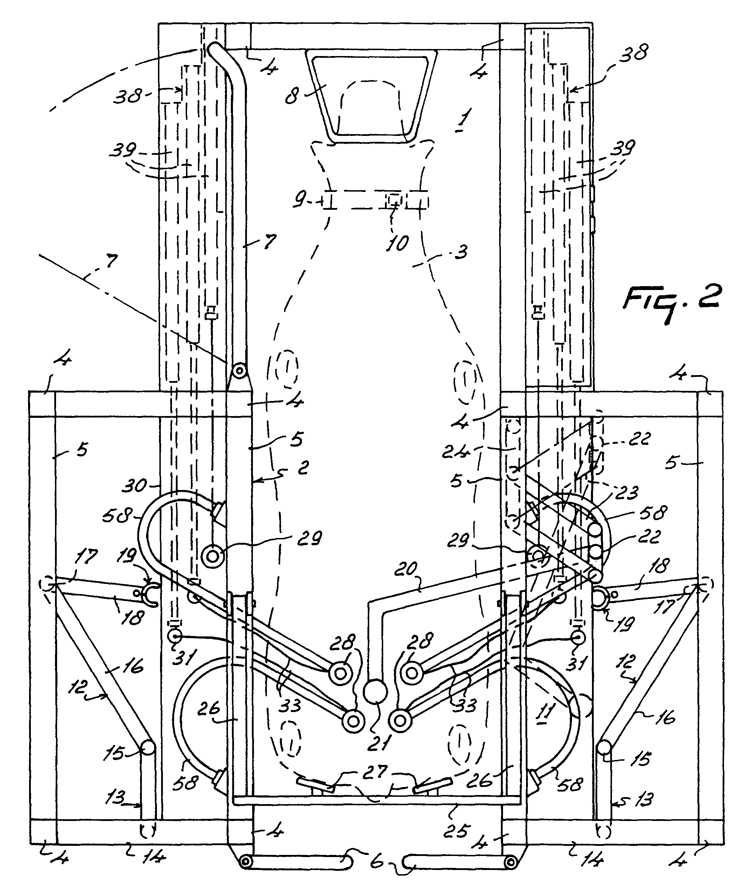

Figure 2 is a plan view of this implement, in which the four milking cups are connected to the teats of the animal;
Figure 3 is a side view of the implement according to the invention;
Figure 4 shows, in rear view, the implement according to the invention;
Figures 5 and 6 show a gripper to be used for seizing the cups;
Figure 7 shows a cup suitable for milking;
Figures 8 and 9 show a cup appropriate for cleaning and/or foremilking;
Figure 10 shows a number of diagrams, with the aid of which it will be explained how, subsequently, the cleaning and milking cups are connected, in a situation in which there are provided four milking cups and two cleaning cups, and
Figure 11 shows an alternative of part of the implement according to the invention, in a situation in which there are provided four milking cups and four cleaning cups.

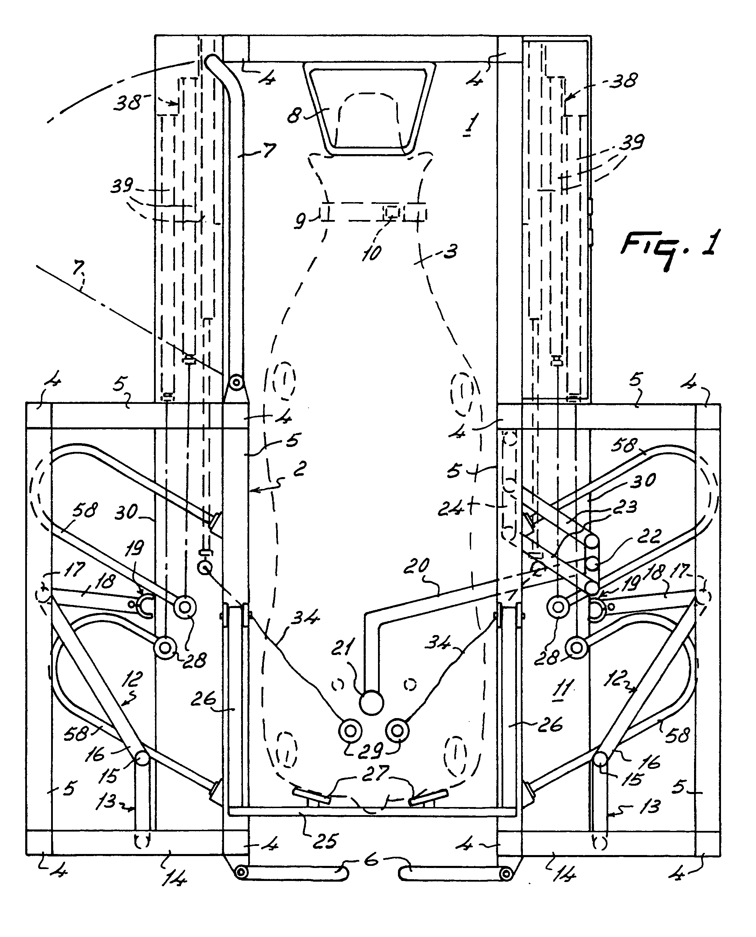

Figure 1 shows, in plan view, a milk box 1 including a fencing 2 surrounding an animal 3, in this case a cow. The fencing 2 comprises beams 4, while, between the rearmost beams and the middle beams, there are provided interspaced crossbeams 5 extending parallel to each other. The milk box 1 is provided at its rear side with an entrance door 6 and at its left hand longitudinal side with an exit door 7. If required, the exit door 7, after having been opened, may connect the milk box 1 with a separate room, such as a separation room or the cowshed. Near the front side of the milk box 1, there is furthermore provided, on a crossbeam 5, a fodder trough 8, in which concentrate may be supplied to the animal 3. For the purpose of identification of the animal 3, there is provided, around the neck thereof, a collar 9 including a transmitter 10 cooperating with a (non-shown) cow identification system.

Near the milk box 1, there is moreover provided a milking robot 11 including, on both longitudinal sides of the milk box 1, a gripper 12. Each of the grippers 12 is connected with a rearmost beam 4 by means of a parallellogram pivot arm construction 13 via a beam construction 14. The beam constructions 14 are disposed on the rearmost beams 4 transversely to the longitudinal direction of the milk box 1. By means of a (non-shown) cylinder it is possible to move a gripper 12 in height. The gripper 12 comprises a first arm portion 16 pivotable about a vertical shaft 15. A second arm portion 18 is connected, pivotably about a vertical shaft 17, with the end of the first arm portion 16. At the end of this second arm portion 18, there is provided a gripping member 19.

On one longitudinal side of the milk box 1, there is disposed a further robot arm 20 provided with a detector 21, preferably a laser detector, for the purpose of determining the position of the teats of the animal 3. The further robot arm 20 is connected, pivotably about a vertical shaft 22, with a first parallellogram pivot arm construction 23 extending substantially horizontally and being connected with a second parallellogram pivot arm construction 24 extending downwardly and situated in a vertical plane. The other end of the second vertical parallellogram pivot arm construction 24 is connected with a crossbeam 5 of the fencing 2 of the milk box 1. Both parallellogram pivot arm constructions are controllable by means of (non-shown) preferably pneumatic cylinders.

The position of the detector 21 under the animal's udder is determined by means of a position measuring member 25 which, pushed against the animal, in the present embodiment against the rear side thereof, ascertains the animal's position relative to the milk box 1. The position measuring member 25, which is only indicated schematically, comprises on both sides positioning elements 26 being adjustable in the longitudinal direction of the milk box 1 and ensuring that the plates 27 remain pushed against the rear side of the animal, while the adjusted length of the positioning elements 26 is an indication for the place where the udder is situated in the longitudinal direction of the milk box and, consequently, an indication for the place where the detector 21 is to be arranged. In the embodiment shown, the detector is disposed approximately in the centre between the teats and is adapted to make a rotating movement or a reciprocating pivoting movement through an angle of approximately 300° for the purpose of determining the position of the teats. The position of the detector 21 being in a fixed relation to the position measuring member 25, the position of the teats relative to the milk box 1 can be deduced from the position of the teats detected by the detector and the position of the positioning elements 26. As soon as the position of the teats is known, the grippers 12 will connect the cleaning cups and subsequently the milking cups.

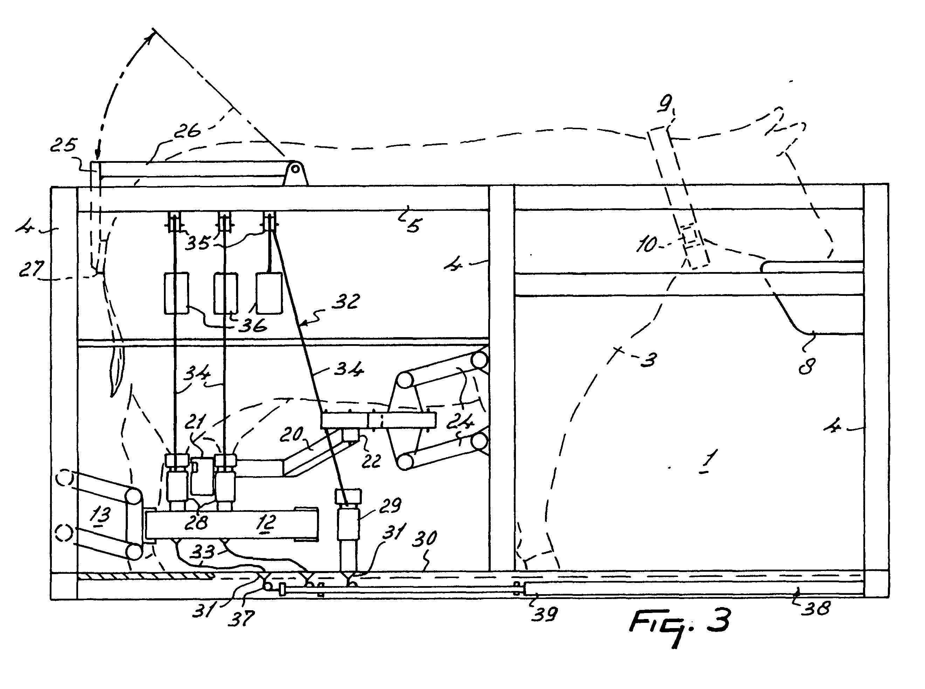

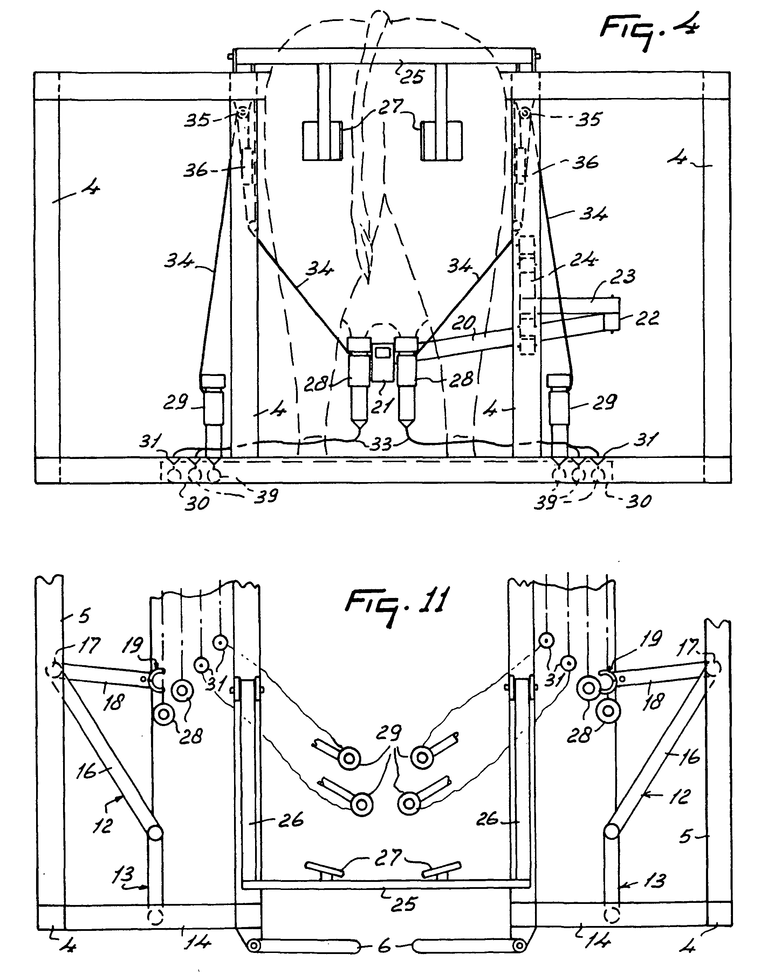

For that purpose, in the present embodiment, the milking robot 11 is provided with four milking cups 28 and two cleaning cups 29 which, when the milking robot 11 is out of operation, are arranged in seats in two groups of three cups on both sides of the milk box 1. These seats constitute a cup carrier 30 (Figures 3 and 4). The cup carrier 30 is provided with a conical recess 31 corresponding with the lower, conical part of a cup 28, 29. In the present embodiment, on both longitudinal sides of the milk box 1 and next thereto, there is disposed a cup carrier 30 including three conical recesses 31 situated, seen in the longitudinal direction of the milk box 1, obliquely behind each other. Two of these recesses 31 are adapted to contain milking cups, the other one being suitable to contain a cleaning cup.

Moreover, each cup 28, 29 is provided with transport means 32, by means of which the relevant cup 28, 29, during displacement towards the cup carrier 30 and during disconnection from the teat, is maintained continuously or almost continuously in a substantially upward position. As is shown in Figures 3 and 4, the transport means 32 comprise a cable 33 extending substantially horizontally, and a cable 34 extending substantially vertically. One end of the upwardly extending cable 34 is connected with a cup 28, 29, while its other end is wrapped over a roller element 35, suspended from the upper side of one of the crossbeams 5, and is provided with a counterweight 36. By means of the counterweight on the cable 34, the upper part of a cup 28, 29 is prevented from coming into contact with the floor of the milk box. At the underside of a cup 28, 29, in the conical part thereof, there is provided a cable fastening, by means of which one end of the substantially horizontally extending cable 33 is connected with a cup 28, 29. The cable 33 is inserted through an opening in the cup carrier 30 and is then wrapped around a roller element 37 and connected to the end of a withdrawing member 38. The cables 33 of one pair of milking cups 28 and one cleaning cup 29 leave the cup carrier 30 approximately parallel to each other and extend in the longitudinal direction of the milk box 1 until the withdrawing members 38 provided for each of them. In the present embodiment, the withdrawing members 38 are designed as pneumatic cylinders 39, but they may also be designed as electric or hydraulic cylinders. The cylinders are preferably made of a light material, such as aluminium. In the embodiment shown, on each longitudinal side of the milk box 1, there are disposed three pneumatic cylinders 39, parallel and next to each other. The end of each piston rod of a pneumatic cylinder 39 includes a cable fastening to which there is attached a cable 33.

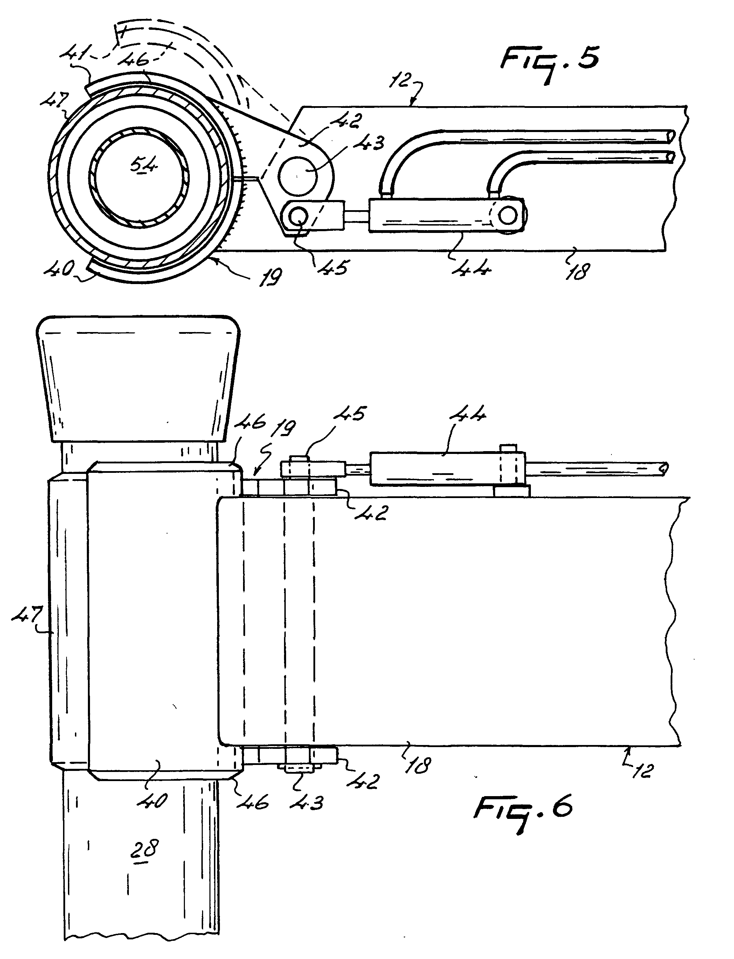

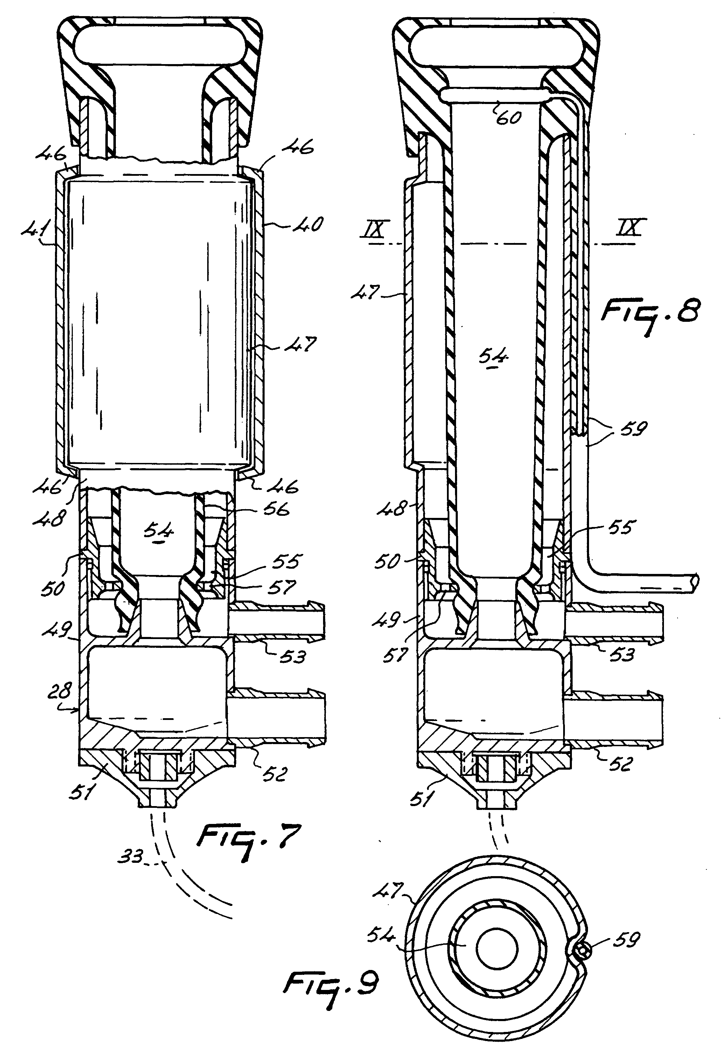

In the Figures 5 and 6, the end of a gripper 12 is represented in a position in which a milking cup 28 or a cleaning cup 29 is seized. As already mentioned before, the gripper 12 comprises a second arm portion 18 to the end of which there is attached a gripping member 19 including a first portion 40 rigidly connected to the second arm portion 18, and a second portion 41 rigidly connected to a lever 42. This lever is rotatable about a substantially vertical shaft 43 relative to the second arm portion 18. The lever 42 is movable by means of a control member 44, preferably constituted by a pneumatic cylinder provided in the second arm portion 18. The piston rod of said pneumatic cylinder engages the lever 42 via a pin 45 situated next to the vertical shaft 43. The two portions 40 and 41 of the gripping member 12 are bended circularly, while their bending corresponds to that of the cups to be seized. At their upper and lower sides the two parts 40 and 41 are provided with an inwards bended edge 46 (see Figure 7), by means of which the gripper 12 can seize a cup around an extension 47 provided thereon in such a way that the cup is not movable in height in the gripper 12, but is freely rotatable in the gripper about its own longitudinal axis.

Figure 7 shows a partial cross-section of a milking cup 28, which is composed of two portions 48 and 49 which, by means of a coupling piece 50, are detachably interconnected. The lower portion 49 of the milking cup comprises a conical part 51 whose shape corresponds to that of the conical recess 31 in the cup carrier 30 and to which conical part 51 there is attached the cable 33, by means of which the milking cup can be drawn into the conical recess and maintained therein. The lower part of the milking cup comprises a connecting piece 52 for a milk tube and a connecting piece 53 for a pulsation tube. The milk tube debouches into the teat space 54, while the pulsation tube debouches into the pulsation space 55, which is separated from the teat space 54 by means of the teat lining 56. The pulsation space 55 is substantially situated in the upper part of the milking cup i.e. concentrically around the teat space 54. The pulsation space in the lower part of the milking cup is in communication with the pulsation space in the upper part thereof via openings 57. The milk tube 58 connected to the connecting piece 52 is attached to the frame of the milk box 1 by means of a loop, while the pulsation tube may possibly be connected over a part of its length to the milk tube.

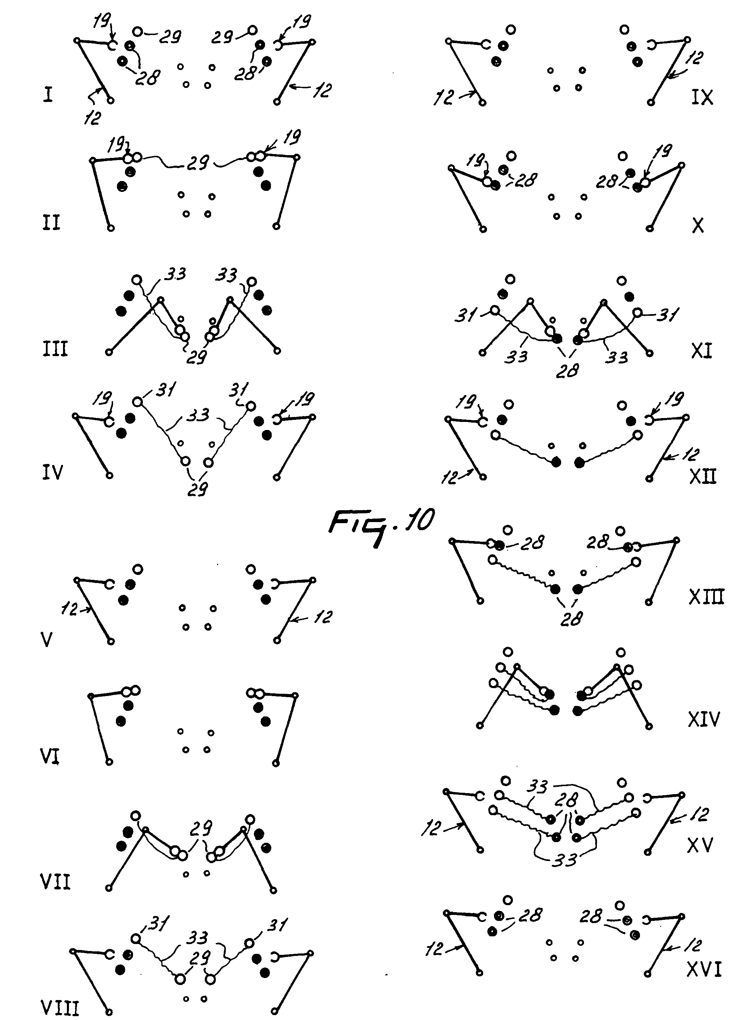

In the Figures 8 and 9 there is represented a cleaning cup 29, whose composition is substantially identical to that of the milking cup shown in Figure 7. However, the cleaning cup 29 is provided with a special line 59 for the supply of a cleaning fluid, which extends in the longitudinal direction of the cup and is situated in a recess in the cup wall, as is shown in Figure 9. Of course, this supply line might also have been disposed in the wall of the cup itself. The cleaning fluid supply line 59 debouches into a fluid collecting space 60 situated near the upper side of the cup and constituting part of the teat space. This fluid collecting space is ring-shaped and its diameter is larger than that of the further teat space 54 downwardly adjacent thereto. To the connecting piece 52, there is connected, contrary to the milking cup shown in Figure 7, a discharge line for cleaning fluid and/or foremilk, while to the connecting piece 53 there may be connected, again in the usual manner, a pulsation tube. The pulsation is effected for the purpose of foremilking and is not required for cleaning. After cleaning fluid has been supplied for some time and has been sucked along the teats, the supply of this fluid is stopped and the pulsator is activated. Due to the changing pressure thus created in the pulsation space, there can be removed foremilk. In relation to the cleaning, this foremilking takes a relatively short period of time. Also here the cleaning fluid supply line 59 and possibly the pulsation tube may be connected over a part of their length with the discharge line for the cleaning fluid and/or the foremilk. When a cleaning cup is connected to a teat, there prevails an underpressure in the teat space. Due to this underpressure, cleaning fluid is sucked in via the supply line 59 and distributed in the ring-shaped fluid collecting space 60 around the teat inserted into the cup, whereafter the fluid around the teat is sucked downwards and discharged via the line connected to the connecting piece 52.

In Figure 10 there is indicated in sixteen diagrams in what order and in what manner the cleaning cups, respectively the milking cups are connected, respectively disconnected. In diagram I the milking cups 28 and the cleaning cups 29 are in the inoperative position on both sides of the milk box 1. In diagram II there is indicated how, with the aid of the grippers 12, the cleaning cups 29 are seized first. Diagram III shows the moment when the cleaning cups 29 are connected to the rearmost teats of the animal, while it is also shown how the cleaning cups, by means of the cables 33, remain connected with their seats to the side of the milk box. Diagram IV shows the situation in which the grippers 12 have been withdrawn again, while the rearmost teats are cleaned and foremilk is removed therefrom with the aid of the cleaning cups 29. After cleaning and foremilking, the underpressure, due to which the cups remain connected to the teats, is removed in the cups and the relevant cylinders 39 are activated, so that the cleaning cups can be withdrawn towards their conical seats on the sides of the milk box 1. This situation is represented in diagram V. The process is repeated in such a way that, as is indicated in diagram VI, the cleaning cups are again seized by the grippers 12, but are now connected to the foremost teats, as is shown in diagram VII. Diagram VIII shows how the grippers are brought back to the starting position, while cleaning of the foremost teats and foremilking are effected. Although, during cleaning of the foremost teats, the grippers 12 might already connect milking cups to the rearmost teats, the diagrams show a situation in which the milking cups are only connected to the teats after cleaning of the foremost teats has finished. Diagram IX shows the inoperative situation after cleaning of the teats, whereafter, as is shown in diagram X, the milking cups that are to be connected to the rearmost teats are seized by the grippers 12 (see diagram XI). As soon as the milking cups have been connected to the rearmost teats, the grippers are again brought into the inoperative position (see diagram XII), while, immediately thereafter, they will seize the milking cups to be connected to the foremost teats of the animal (see diagram XIII). As soon as all the milking cups have been connected, the grippers are again brought into the inoperative position, as is shown in diagram XV, whereafter, as soon as an udder quarter has been milked, the relevant milking cup is disconnected and withdrawn into its starting position. Diagram XVI shows the situation in which, after milking, all the cups are back in their starting position.

Figure 11 shows schematically an alternative for the above-described embodiment. In this alternative, there are provided four milking cups 28 and four cleaning cups 29. On both sides of the milk box, there are arranged in conical recesses in a cup carrier 30, two milking cups and two cleaning cups which, in the above-described manner, can be seized one by one by the grippers 12 and connected to the teats of the animal for the purpose of cleaning and/or foremilking and subsequently milking the animal. Of course, on both sides of the milk box, there are then provided four cylinders 39 for the purpose of withdrawing the cups, after the latter have been disconnected from the teat, into their starting position and maintaining same therein.

The invention is not restricted to the embodiments shown, but also relates to all kinds of modifications, of course, falling within the scope of the following claims.

## Claims

1. An implement for automatically milking animals, such as cows, comprising a milking box (1) with a milking robot, the milking robot comprising milking means with teat cups (28) connectable to the teats of the animal and cleaning and/or foremilking means with at least one additional teat cup (29) connectable to the teats of the animal, **characterized in that** the milking robot (11) further comprises gripping means (12, 13, 15-19) with at least one gripper (12) to engage the teat cups (28, 29) individually and to connect the teat cups (28, 29) to the teats.

2. An implement as claimed in claim 1, **characterized in that** the teat cups (28) of the milking means and the at least one teat cup (29) of the cleaning and/or foremilking means (29) are, in the inoperative position, arranged sidewards the milking box (1) near the floor thereof.

3. An implement as claimed in claim 2, **characterized in that** the teat cups are arranged at both sides of the milking box (1) and the gripping means (12, 13, 15-19) are provided with at least two grippers (12), and that, in the inoperative position, at both sides of the milking box (1) there is arranged a gripper (12) to engage the teat cups (28, 29) at the respective side of the milking box and to connected them to teats of the animal.

4. An implement as claimed in any one of the preceding claims, **characterized in that** teat cups (28) of the milking means and the at least one teat cup (29) of the cleaning and/or foremilking means can be connected simultaneously to respective teats.

5. An implement as claimed in any one of the preceding claims, **characterized in that** seats (30, 31) are provided on both longitudinal sides of the milking box (1) said seats constituting a carrier for the teat cups (28, 29) in the inoperative position.

6. An implement as claimed in claim 3, **characterized in that** a gripper (12) is movable in an upward direction so as to be capable of being moved across the cups in the inoperative position.

7. An implement as claimed in claim 3 or 6, **characterized in that** a gripper (12) is provided with a gripping member (19) with two parts (40, 41) automatically movable relative to each other, towards each other and from each other, to engage a teat cup (28, 29).

8. An implement as claimed in claim 7, **characterized in that** the two parts (40, 41) of the gripping member (19) are pivotable relative to each other.

9. An implement as claimed in claim 8, **characterized in that** the two parts (40, 41) of the gripping member (19) constitute a holder, in which a teat cup (28, 29) is freely rotatable.

10. An implement as claimed in any one of the claims 7-9, **characterized in that** the gripper is provided with a pneumatic control cylinder (44) to control the two parts (40, 41) of the gripping member (19).

11. An implement as claimed in any one of the preceding claims, **characterized in that**, by means of a first cable (32), a teat cup (28, 29) is suspended in such a way that the opening of the teat cup cannot come into contact with the floor of the milk box (1).

12. An implement as claimed in claim 11, **characterized in that** a teat cup (28, 29) is suspended from a longitudinal side of the milk box (1).

13. An implement as claimed in claim 11 or 12, **characterized in that**, by means of the first cable (32), a teat cup (28, 29) is suspended over a roller element (35), while at the end of this cable (32) there is provided a counterweight (36).

14. An implement as claimed in any one of the preceding claims, **characterized in that**, by means of a second cable (33), a teat cup (28, 29) in its inoperative position can be placed into its seat (30, 31) near the floor of the milk box(1).

15. An implement as claimed in claim 14, **characterized in that** the second cable (33) is connected with a pneumatic control cylinder (39).

16. An implement as claimed in claim 15, **characterized in that** the control cylinder (39) is made of a light material, such as aluminium.

17. An implement as claimed in claim 15 or 16, **characterized in that** the control cylinders (39), by means of which the teat cups (28, 29) can be brought into the inoperative position, are disposed at a side of the milk box (1).

18. An implement as claimed in any one of the preceding claims, **characterized in that**, for the purpose of determining the position of the teats, there is provided a detector (21), preferably a laser detector, arranged on a separate robot arm (20).

19. An implement as claimed in claim 18, **characterized in that** this robot arm (20) is disposed on one of the longitudinal sides of the milk box (1), pivotably about an upwardly extending shaft (22) and movably in two or more directions at the milk box (1).

20. An implement as claimed in claim 18 or 19, **characterized in that** a detector (21) is disposed rotatably or pivotably at the end of the robot arm (20).

21. An implement as claimed in any one of claims 18 to 20, **characterized in that** the position of the detector (21) is determined by means of a measuring member (25) which ascertains the animal's position relative to the milk box (1).

22. An implement as claimed in claim 21, **characterized in that**, by means of the position measuring member (25), the robot arm (20) including the detector (21) is controlled in such a way that the detector (21) follows the animal's movements in the longitudinal direction of the milk box (1).

23. An implement as claimed in any one of the preceding claims, **characterized in that** each of the teat cups (28) of the milking means is provided with a milk tube (58) attached by means of a loop to the frame of the milk box (1).

24. An implement as claimed in claim 23, **characterized in that** each of the teat cups (28) of the milking means is provided with a pulsation tube which, over a part of its length, is connected to the milk tube (58).

25. An implement as claimed in any one of the preceding claims, **characterized in that** each of the teat cups (29) of the cleaning and/or for foremilking means is provided with a discharge line for the cleaning fluid and/or for the foremilk.

26. An implement as claimed in claim 25, **characterized in that** each of the teat cups (29) of the cleaning and/or for foremilking means is provided with a line (59) for the supply of a cleaning fluid, which line (59) debouches into a fluid collecting space (60), situated near the upper side of the cup (29) and constituting part of the teat space.

27. An implement as claimed in claim 26, **characterized in that** this fluid collecting space (60) is ring-shaped, and its diameter is larger than that of the further teat space (54) downwardly adjacent thereto.

28. An implement as claimed in claim 26 or 27, **characterized in that** the cleaning fluid is sucked in by the underpressure prevailing in the lower part of the teat space after the teat cup has been connected to the teat.

29. An implement as claimed in claim 26, 27 or 28, **characterized in that** the cleaning fluid supply line (59) extending in the longitudinal direction of the teat cup and is located at the wall of the teat cup or in a recess therein.

30. An implement as claimed in any one of claims 26 to 29, **characterized in that** the cleaning fluid supply line (59), possibly together with a pulsation tube, is connected, over a part of its length, to the discharge line for the cleaning fluid and/or for performing at the foremilking.

## Patentansprüche

1. Einrichtung zum automatischen Melken von Tieren, wie z. B. Kühen, die eine Melkbox (1) mit einem Melkroboter umfaßt, wobei der Melkroboter eine Melkvorrichtung mit Zitzenbechern (28) umfaßt, die an die Zitzen des Tieres anschließbar sind, sowie eine Reinigungs- und/oder Vormelkvorrichtung mit mindestens einem zusätzlichen Zitzenbecher (29), der an die Zitzen des Tieres anschließbar ist,
**dadurch gekennzeichnet, daß** der Melkroboter (11) ferner Greifvorrichtungen (12, 13, 15 bis 19) mit mindestens einem Greifer (12) umfaßt, um die Zitzenbecher (28, 29) einzeln zu ergreifen und die Zitzenbecher (28, 29) an die Zitzen anzuschließen.

2. Einrichtung nach Anspruch 1,
**dadurch gekennzeichnet, daß** die Zitzenbecher (28) der Melkvorrichtung und der mindestens eine Zitzenbecher (29) der Reinigungs- und/oder Vormelkvorrichtung (29) in der Ruhelage seitlich der Melkbox (1) nahe deren Boden angeordnet sind.

3. Einrichtung nach Anspruch 2,
**dadurch gekennzeichnet, daß** die Zitzenbecher auf beiden Seiten der Melkbox (1) angeordnet sind und die Greifvorrichtungen (12, 13, 15 bis 19) mit mindestens zwei Greifern (12) versehen sind, und daß in der Ruhelage auf beiden Seiten der Melkbox (1) ein Greifer (12) angeordnet ist, um die Zitzenbecher (28, 29) auf der jeweiligen Seite der Melkbox zu ergreifen und sie an Zitzen des Tieres anzuschließen.

4. Einrichtung nach einem der vorhergehenden Ansprüche,
**dadurch gekennzeichnet, daß** Zitzenbecher (28) der Melkvorrichtung und der mindestens eine Zitzenbecher (29) der Reinigungs- und/oder Vormelkvorrichtung gleichzeitig an entsprechende Zitzen angeschlossen werden können.

5. Einrichtung nach einem der vorhergehenden Ansprüche,
**dadurch gekennzeichnet, daß** an beiden Längsseiten der Melkbox (1) Sitze (30, 31) vorhanden sind, wobei die Sitze in der Ruhelage einen Träger für die Zitzenbecher (28, 29) bilden.

6. Einrichtung nach Anspruch 3,
**dadurch gekennzeichnet, daß** ein Greifer (12) nach oben bewegbar ist, so daß er über die in der Ruhelage befindlichen Becher hinwegzubewegen ist.

7. Einrichtung nach Anspruch 3 oder 6,
**dadurch gekennzeichnet, daß** ein Greifer (12) ein Greifglied (19) mit zwei Teilen (40, 41) aufweist, die automatisch relativ zueinander, aufeinander zu und voneinander weg bewegbar sind, um einen Zitzenbecher (28, 29) zu ergreifen.

8. Einrichtung nach Anspruch 7,
**dadurch gekennzeichnet, daß** die beiden Teile (40, 41) des Greifgliedes (19) relativ zueinander schwenkbar sind.

9. Einrichtung nach Anspruch 8,
**dadurch gekennzeichnet, daß** die beiden Teile (40, 41) des Greifgliedes (19) einen Halter bilden, in dem ein Zitzenbecher (28, 29) frei drehbar ist.

10. Einrichtung nach einem der Ansprüche 7 bis 9,
**dadurch gekennzeichnet, daß** der Greifer mit einem pneumatischen Steuerzylinder (44) zum Steuern der beiden Teile (40, 41) des Greifgliedes (19) versehen ist.

11. Einrichtung nach einem der vorhergehenden Ansprüche,
**dadurch gekennzeichnet, daß** ein Zitzenbecher (28, 29) mittels einer ersten Schnur (32) derart aufgehängt ist, daß die Öffnung des Zitzenbechers mit dem Boden der Melkbox (1) nicht in Kontakt kommen kann.

12. Einrichtung nach Anspruch 11,
**dadurch gekennzeichnet, daß** ein Zitzenbecher (28, 29) an einer Längsseite der Melkbox (1) aufgehängt ist.

13. Einrichtung nach Anspruch 11 oder 12,
**dadurch gekennzeichnet, daß** ein Zitzenbecher (28, 29) mittels der ersten Schnur (32) an einer Rolle (35) aufgehängt ist, wobei am Ende dieser Schnur (32) ein Gegengewicht (36) angeordnet ist.

14. Einrichtung nach einem der vorhergehenden Ansprüche,
**dadurch gekennzeichnet, daß** ein Zitzenbecher (28, 29) in seiner Ruhelage mittels einer zweiten Schnur (33) in seinen Sitz (30, 31) nahe dem Boden der Melkbox (1) zu bewegen ist.

15. Einrichtung nach Anspruch 14,
**dadurch gekennzeichnet, daß** die zweite Schnur (33) mit einem pneumatischen Steuerzylinder (39) verbunden ist.

16. Einrichtung nach Anspruch 15,
**dadurch gekennzeichnet, daß** der Steuerzylinder (39) aus einem leichten Material, wie z. B. Aluminium, hergestellt ist.

17. Einrichtung nach Anspruch 15 oder 16,
**dadurch gekennzeichnet, daß** die Steuerzylinder (39), mittels derer die Zitzenbecher (28, 29) in die Ruhelage zu bewegen sind, an einer Seite der Melkbox (1) angeordnet sind.

18. Einrichtung nach einem der vorhergehenden Ansprüche,
**dadurch gekennzeichnet, daß** zur Ermittlung der Lage der Zitzen ein Detektor (21), vorzugsweise ein Laserdetektor, an einem getrennten Roboterarm (20) angeordnet ist.

19. Einrichtung nach Anspruch 18,
**dadurch gekennzeichnet, daß** dieser Roboterarm (20) an einer der Längsseiten der Melkbox (1) angeordnet ist, um eine aufwärts gerichtete Achse (22) drehbar ist und in zwei oder mehrere Richtungen an der Melkbox (1) bewegbar ist.

20. Einrichtung nach Anspruch 18 oder 19,
**dadurch gekennzeichnet, daß** ein Detektor (21) drehbar oder schwenkbar am Ende des Roboterarmes (20) angeordnet ist.

21. Einrichtung nach einem der Ansprüche 18 bis 20,
**dadurch gekennzeichnet, daß** die Position des Detektors (21) mittels eines Ermittlungsgliedes (25) bestimmt wird, das die Position des Tieres relativ zu der Melkbox (1) ermittelt.

22. Einrichtung nach Anspruch 21,
**dadurch gekennzeichnet, daß** der Roboterarm (20) mit dem Detektor (21) mittels des Positionsermittlungsgliedes (25) derart gesteuert wird, daß der Detektor (21) den Bewegungen des Tieres in Längsrichtung der Melkbox (1) folgt.

23. Einrichtung nach einem der vorhergehenden Ansprüche,
**dadurch gekennzeichnet, daß** jeder der Zitzenbecher (28) der Melkvorrichtung eine Milchleitung (58) aufweist, die in Form einer Schlaufe am Rahmen der Melkbox (1) angebracht ist.

24. Einrichtung nach Anspruch 23,
**dadurch gekennzeichnet, daß** jeder der Zitzenbecher (28) der Melkvorrichtung eine Pulsierleitung aufweist, die über einen Teil ihrer Länge mit der Milchleitung (58) verbunden ist.

25. Einrichtung nach einem der vorhergehenden Ansprüche,
**dadurch gekennzeichnet, daß** jeder der Zitzenbecher (29) der Reinigungs- und/oder Vormelkvorrichtung eine Abflußleitung für die Reinigungsflüssigkeit und/oder für das Vorgemelk aufweist.

26. Einrichtung nach Anspruch 25,
**dadurch gekennzeichnet, daß** jeder der Zitzenbecher (29) der Reinigungs- und/oder Vormelkvorrichtung eine Leitung (59) zum Zuführen einer Reinigungsflüssigkeit aufweist, wobei die Leitung (59) in einen Flüssigkeitsaufnahmeraum (60) mündet, der nahe der Oberseite des Bechers (29) angeordnet und Teil des Zitzenraumes ist.

27. Einrichtung nach Anspruch 26,
**dadurch gekennzeichnet, daß** dieser Flüssigkeitsaufnahmeraum (60) ringförmig ausgebildet ist und einen größeren Durchmesser hat als der nach unten an ihn angrenzende übrige Zitzenraum (54).

28. Einrichtung nach Anspruch 26 oder 27,
**dadurch gekennzeichnet, daß** die Reinigungsflüssigkeit von dem Unterdruck angesaugt wird, der im unteren Teil des Zitzenraumes herrscht, nachdem der Zitzenbecher an die Zitze angeschlossen worden ist.

29. Einrichtung nach Anspruch 26, 27 oder 28,
**dadurch gekennzeichnet, daß** die sich in Längsrichtung des Zitzenbechers erstreckende Reinigungsflüssigkeits-Zuführleitung (59) an der Wand des Zitzenbechers oder in einer darin ausgebildeten Ausnehmung angeordnet ist.

30. Einrichtung nach einem der Ansprüche 26 bis 29,
**dadurch gekennzeichnet, daß** die Reinigungsflüssigkeits-Zuführleitung (59) - eventuell zusammen mit einer Pulsierleitung - über einen Teil ihrer Länge mit der Abflußleitung für die Reinigungsflüssigkeit und/oder für das Vorgemelk verbunden ist.

## Revendications

1. Instrument pour traire automatiquement des animaux, tels que des vaches, comprenant un box de traite (1) avec un robot de traite, le robot de traite comprenant des moyens de traite dotés de gobelets trayeurs (28) aptes à être reliés aux trayons de l'animal, ainsi que des moyens de nettoyage et/ou de tirage des premiers jets, au moins un gobelet trayeur supplémentaire (29) pouvant être relié aux trayons de l'animal, **caractérisé en ce que** le robot de traite (11) comprend en outre des moyens de serrage (12, 13, 15 à 19) avec au moins un dispositif de préhension (12) pour mettre en prise les gobelets trayeurs (28, 29) individuellement et pour relier les gobelets trayeurs (28, 29) aux trayons.

2. Instrument selon la revendication 1, **caractérisé en ce que** les gobelets trayeurs (28) des moyens de traite et le au moins un gobelet trayeur (29) des moyens de nettoyage et/ou de tirage des premiers jets (29) sont disposés, dans la position de repos, sur les côtés du box de traite (1) à proximité du plancher de celui-ci.

3. Instrument selon la revendication 2, **caractérisé en ce que** les gobelets trayeurs sont disposés sur les deux côtés du box de traite (1) et **en ce que** les moyens de serrage (12, 13, 15 à 19) sont dotés d'au moins deux pinces (12), et **en ce que**, dans la position de repos, au niveau des deux côtés du box de traite (1), est disposée une pince (12) afin de mettre en prise les gobelets trayeurs (28, 29) au niveau du côté respectif du box de traite et de les relier aux trayons de l'animal.

4. Instrument selon l'une quelconque des revendications précédentes, **caractérisé en ce que** les gobelets trayeurs (28) des moyens de traite et le au moins un gobelet trayeur (29) des moyens de nettoyage et/ou de tirage des premiers jets peuvent être reliés de manière simultanée aux trayons respectifs.

5. Instrument selon l'une quelconque des revendications précédentes, **caractérisé en ce que** des appuis (30, 31) sont prévus sur les deux côtés longitudinaux du box de traite (1), lesdits appuis constituant un support pour les gobelets trayeurs (28, 29) dans la position de repos.

6. Instrument selon la revendication 3, **caractérisé en ce qu'**une pince (12) mobile selon une direction ascendante est prévue de manière à être en mesure d'être déplacée à travers les gobelets dans la position de repos.

7. Instrument selon la revendication 3 ou 6, **caractérisé en ce qu'**une pince (12) est dotée d'un élément de serrage (19) avec deux parties (40, 41) pouvant être déplacées automatiquement l'une par rapport à l'autre, l'une en direction de l'autre et l'une à partir de l'autre, de manière à mettre en prise un gobelet trayeur (28, 29).

8. Instrument selon la revendication 7, **caractérisé en ce que** les deux parties (40, 41) de l'élément de serrage (19) peuvent pivoter l'une par rapport à l'autre.

9. Instrument selon la revendication 8, **caractérisé en ce que** les deux parties (40, 41) de l'élément de serrage (19) constituent un dispositif de retenue, dans lequel un gobelet trayeur (28, 29) peut pivoter librement.

10. Instrument selon l'une quelconque des revendications 7 à 9, **caractérisé en ce que** la pince est dotée d'un cylindre de commande pneumatique (44) pour commander les deux parties (40, 41) de l'élément de serrage (19).

11. Instrument selon l'une quelconque des revendications précédentes, **caractérisé en ce que**, grâce à un premier câble (32), un gobelet trayeur (28, 29) est suspendu de telle sorte que l'ouverture du gobelet trayeur ne puisse pas venir en contact avec le plancher du box de traite (1).

12. Instrument selon la revendication 11, **caractérisé en ce qu'**un gobelet trayeur (28, 29) est suspendu à partir d'un côté longitudinal du box de traite (1).

13. Instrument selon la revendication 11 ou 12, **caractérisé en ce que**, grâce au premier câble (32), un gobelet trayeur (28, 29) est suspendu sur un élément formant rouleau (35), tandis qu'au niveau de l'extrémité de ce câble (32) est prévu un contrepoids (36).

14. Instrument selon l'une quelconque des revendications précédentes, **caractérisé en ce que**, grâce à un second câble (33), un gobelet trayeur (28, 29), dans sa position de repos, peut être déplacé jusque dans son appui (30, 31) à proximité du plancher du box de traite (1).

15. Instrument selon la revendication 14, **caractérisé en ce que** le second câble (33) est relié à un cylindre de commande pneumatique (39).

16. Instrument selon la revendication 15, **caractérisé en ce que** le cylindre de commande (39) se compose d'un matériau léger, tel que de l'aluminium.

17. Instrument selon la revendication 15 ou 16, **caractérisé en ce que** les cylindres de commande (39), grâce auxquels les gobelets trayeurs (28, 29) peuvent être amenés dans la position de repos, sont disposés au niveau d'un côté du box de traite (1).

18. Instrument selon l'une quelconque des revendications précédentes, **caractérisé en ce que**, dans le but de déterminer la position des trayons, il est prévu un détecteur (21), de préférence un détecteur laser, disposé sur un bras de robot séparé (20).

19. Instrument selon la revendication 18, **caractérisé en ce que** ce bras de robot (20) est disposé sur l'un des côtés longitudinaux du box de traite (1) de manière pivotante autour d'un arbre s'étendant vers le haut (22) et de manière mobile dans deux directions ou plus au niveau du box de traite (1).

20. Instrument selon la revendication 18 ou 19, **caractérisé en ce qu'**un détecteur (21) est disposé de manière rotative ou pivotante au niveau de l'extrémité du bras de robot (20).

21. Instrument selon l'une quelconque des revendications 18 à 20, **caractérisé en ce que** la position du détecteur (21) est déterminée au moyen d'un élément de mesure (25) qui établit la position de l'animal par rapport au box de traite (1).

22. Instrument selon la revendication 21, **caractérisé en ce que**, au moyen de l'élément de mesure de position (25), le bras de robot (20) comprenant le détecteur (21) est commandé de telle sorte que le détecteur (21) suive les déplacements de l'animal dans la direction longitudinale du box de traite (1).

23. Instrument selon l'une quelconque des revendications précédentes, **caractérisé en ce que** chacun des gobelets trayeurs (28) des moyens de traite est doté d'un tube pour le lait (58) attaché au moyen d'une boucle au châssis du box de traite (1).

24. Instrument selon la revendication 23, **caractérisé en ce que** chacun des gobelets trayeurs (28) des moyens de traite est doté d'un tube à pulsations qui, sur une partie de sa longueur, est relié au tube pour le lait (58).

25. Instrument selon l'une quelconque des revendications précédentes, **caractérisé en ce que** chacun des gobelets trayeurs (29) des moyens de nettoyage et/ou de tirage des premiers jets est doté d'une ligne de décharge pour le liquide de nettoyage et/ou le tirage des premiers jets.

26. Instrument selon la revendication 25, **caractérisé en ce que** chacun des gobelets trayeurs (29) des moyens de nettoyage et/ou de tirage des premiers jets est doté d'une ligne (59) pour l'alimentation d'un liquide de nettoyage, laquelle ligne (59) débouche dans un espace de collecte de liquide (60), situé à proximité du côté supérieur du gobelet (29) et constituant une partie de l'espace séparant le gobelet trayeur du trayon.

27. Instrument selon la revendication 26, **caractérisé en ce que** cet espace de collecte de liquide (60) est de forme annulaire, et son diamètre est plus large que celui de l'espace séparant le gobelet trayeur du trayon supplémentaire (54) adjacent vers le bas à ce dernier.

28. Instrument selon la revendication 26 ou 27, **caractérisé en ce que** le liquide de nettoyage est aspiré par la sous-pression régnant dans la partie inférieure de l'espace séparant le gobelet trayeur du trayon après que le gobelet trayeur a été relié au trayon.

29. Instrument selon la revendication 26, 27 ou 28, **caractérisé en ce que** la ligne d'alimentation en liquide de nettoyage (59) s'étendant dans la direction longitudinale du gobelet trayeur se situe au niveau de la paroi du gobelet trayeur ou dans une cavité se situant dans celle-ci.

30. Instrument selon l'une quelconque des revendications 26 à 29, **caractérisé en ce que** la ligne d'alimentation en liquide de nettoyage (59), éventuellement conjointement au tube à pulsations, est reliée, sur une partie de sa longueur, à la ligne de décharge pour le liquide de nettoyage et/ou pour remplir sa fonction au niveau du tirage des premiers jets.
